# EUROPEAN PATENT SPECIFICATION

(11) **EP 1 547 971 B1**
(45) Date of publication and mention of the grant of the patent: **03.06.2015**
(21) Application number: 04257834.4
(22) Date of filing: 16.12.2004
(51) Int. Cl.: C01B 3/48, C01B 3/36, F23C 6/04

(54) **System and method for cogeneration of hydrogen and electricity**
System und Methode für die Erzeugung von Wasserstoff und Elektrizität
Système et méthode de génération d'hydrogène et de l'électricité

(30) Priority: 24.12.2003 US 745356
(43) Date of publication of application: 29.06.2005
(73) Proprietor: GENERAL ELECTRIC COMPANY, Schenectady, NY 12345 (US)
(72) Inventor: Colibaba-Evulet, Andrei, Clifton Park New York 12065 (US); Balan, Chellappa, Niskayuna New York 12309 (US); Varatharajan, Balachandar, Clifton Park New York 12065 (US)
(74) Representative: Bedford, Grant Richard

(56) References cited:
- WO-A1-99/11571
- GB-A- 1 137 930
- US-A- 5 501 162
- US-A- 5 729 967
- US-A1- 2003 182 862
- US-B1- 6 277 894

## Description

This invention relates to systems and methods for the co-generation of hydrogen and electricity. More specifically, this invention relates to the production of a hydrogen enriched fuel gas using a rich-combustion-quench-reform device and utilizing the hydrogen enriched fuel gas for co-generation of hydrogen and electricity.

Fuel gases are known, in some cases, to be a suitable fuel source for gas turbines. Typically, such fuel gases are generated using a catalytic combustion process at temperatures in the range between about 400°C to about 800°C. Advantageously, these temperatures are low enough so that there is minimal formation of nitrogen oxides. These low temperatures and pressures are insufficient, however to power a turbine, and therefore auxiliary burners must be employed to power a turbine. In some catalytic combustion processes, feedstock gas and air are premixed to form a mixture, which mixture is burned in a combustion zone containing a combustion catalyst that also exhibits steam reforming activity. Partial combustion and reforming of the mixture takes place in the combustion zone, thereby forming a hot reformed gas stream. Part of the hot reformed gas stream is recycled to the aforesaid combustion zone. The remainder of the hot reformed gas is fed to the gas turbine combustor as fuel gas. In other processes, the fuel gas is burned in combination with auxiliary burners burning alcohols and aldehydes.

US 5,501,162 relates to a method of fuel combustion.

US 2003/0182862 discloses a method for obtaining hydrogen from hydrocarbons. The method includes partially oxidizing a first hydrocarbon stream, reforming a second hydrocarbon stream with water, mixing first and second product gas streams to form a third product gas stream and heating a reformer unit with third product gas stream.

US 5,729,967 refers to a method of operating a gas turbine on reformed fuel.

GB 1137930 discusses improvements in or relating to the production of combustible gas.

WO 99/11571 describes an oxygen-fuel boost reformer process and apparatus.

US 6,277,894 relates to a system and method for converting light hydrocarbons into heavier hydrocarbons with a plurality of synthesis gas subsystems.

The above-noted processes relating to the generation of electricity using gas turbines do not teach that the reformed gases (i.e., fuel gases or syn gases) can be formed using non-catalytic processes. Furthermore, a gas turbine system does not address the interaction between the demand for electricity, the formation of reformed gases, and the operational considerations that enhance efficiency. Generally, systems almost always operate at higher efficiencies when the system is steady state. What is needed is a method for producing reformed gases for combustion in a turbine combustor, wherein no catalytic combustion process is required. Furthermore, what is needed is a process that is suitable for accommodating the fluctuations in electrical demand, while still enabling the process to operate at an essentially steady state.

With the emerging hydrogen economy, the production of hydrogen in tandem with electricity will be advantageous to the industry. Production of hydrogen from fuels through catalytic reforming is a well-known process. What is needed is a method for producing hydrogen, wherein the process of making hydrogen is, in effect, a by-product of the generation of electricity wherein the co-generation of electricity and hydrogen lowers the cost of production of both, and leads to gains in system efficiency and operability.

Disclosed herein is a system and method for the co-generation of electricity and hydrogen as defined in the appended claims.

The invention will now be described in greater detail, by way of example, with reference to the drawings, in which:-
Fig. 1 illustrates flow chart of an exemplary system for co-generation of hydrogen and electricity;
Fig. 2 illustrates flow chart of another exemplary system for co-generation of hydrogen and electricity;
Fig. 3 is a schematic illustration of a c-q-r stage for forming an enriched hydrogen stream wherein the c-q-r stage comprises the steps of combusting, quenching and reforming; and
Fig. 4 is a schematic illustration of the repeating steps of c-q-r stage as shown in Fig. 3.

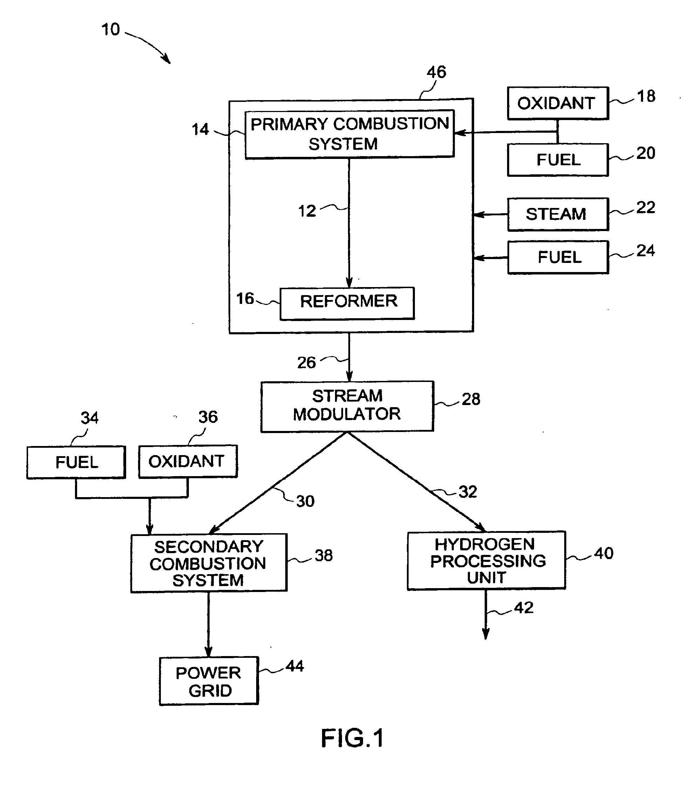

For the purposes of promoting an understanding of the invention, reference will now be made to some exemplary embodiments of the present invention as illustrated in Figures 1-4 and specific language used to describe the same.

Fig. 1 illustrates an exemplary embodiment of a system 10 for co-generation of electricity and hydrogen. The co-generation system 10 comprises at least one primary combustion system 14 to burn a fuel rich mixture and at least one reformer 16 to reform the fuel. A mixture of an oxidant 18 and a fuel 20 is injected into the primary combusting system 14 for burning a fuel rich mixture and produce partially oxidized combustion products rich in hydrogen. The co-generation system further comprises an injection system wherein steam 22 and fuel 24 are injected to the partially oxidized combustion product to form a mixed product stream 12 in a quenching operation. The mixed product stream 12 is fed into a reformer for reforming the mixed product stream 12 to produce a hydrogen enriched stream 26. In some embodiments the primary combustion chamber 14 and the reformer 16 are housed in a common combustion chamber 16.

A portion of the hydrogen enriched stream 30 is burned in a secondary combustion system 38 to produce electricity that may be connected to a power grid 44. Supplemental fuel 34 and oxidant 36 are added to the secondary combustion system 38. A second portion of the hydrogen enriched stream 32 is fed into a hydrogen processing unit 40 to produce hydrogen.

The co-generation system 10, as illustrated in Fig 1, co-generates electricity and hydrogen with a lower production of nitrogen oxide (NOx) pollutants, greater flame stability and lower carbon monoxide emissions than currently possible. The flame temperature herein is a function of the equivalence ratio, which equivalence ratio is a measure of the fuel-to-oxidant ratio in the primary combustion system 14 normalized by the stoichiometric fuel to oxidant ratio. At an equivalence ratio of 1.0, the stoichiometric conditions are reached, and the flame temperature is highest at this point. At equivalence ratios less than 1.0, a combustor is a "lean" combustor, and at equivalence ratios greater than 1.0, a combustor is a "rich" combustor. NOx production increases very rapidly as the stoichiometric flame temperature is reached, and that away from the stoichiometric flame temperature, the thermal NOx production decreases rapidly.

Referring back to Fig. 1, the combustion chamber 16 comprises a primary combustion system 14 for fuel rich combustion and a reformer 16 that reforms the partially oxidized combustion products from the primary combustion system 14. The fuel 20, that may be a gas, and the oxidant 18 may be premixed and injected into the primary combustion system 14. In some embodiments, the fuel and oxidant may be injected separately into the primary combustion system 14. In some other embodiments, the fuel and the oxidants are partially or fully mixed prior to being fed into the primary combustion system 14. The fuel 20 may comprise any suitable gas or liquid, such as for example, natural gas, methane, naphtha, butane, propane, diesel, kerosene, an aviation fuel, a coal derived fuel, a bio-fuel, an oxygenated hydrocarbon feedstock, and mixtures thereof. In some embodiments, the fuel may preferably comprise natural gas (NG). The availability, low cost and ease of mixing of natural gas offset its lower heat content to make natural gas the preferred fuel for combustion. The oxidant 18 may comprise any suitable gas containing oxygen, such as for example, air, oxygen rich air, oxygen depleted air, and/or pure oxygen. In the rich combustion stage, the equivalence ratio is greater than 1, preferably closer to the rich flame-stabilization limit. In some embodiments, the premixed fuel and oxidant is injected into the primary combustion system 14 through a nozzle comprising a swirler, which swirler comprises a plurality of swirl vanes that impart rotation to the entering oxidant and a plurality of fuel spokes that distribute fuel in the rotating oxidant stream. The fuel and oxidant is mixed in an annular passage within the premix fuel nozzle before reacting within the primary combustion system 14. After the rich combustion operation, the injection of fuel 24 and steam 22 is carried out in the quenching step using an injection system. In some embodiments, the fuel and steam is injected into the mixed product stream 12 exiting the primary combustion system 14. The fuel 24, injected in the quenching step, may also be injected into the combustion chamber 46 through an array of apertures in an interior wall of the combustion chamber 46. The fuel 24 may comprise a low boiling hydrocarbon feedstock, natural gas, methane, naphtha, butane, propane, and/or mixtures thereof. In some embodiments, a preferred fuel is natural gas, which is largely methane. The mole ratio of fuel and steam is preferably at about 1:1, producing a stream of hot gases designated as mixed product stream. The mixed product stream is fed into a reformer 16 to produce a hydrogen enriched stream 26 that comprises substantial amount of hydrogen. In some embodiments, the hydrogen enriched stream 26 may further comprise carbon monoxide, nitrogen, equilibrium constant quantities of water, carbon dioxide, and unburnt fuel. The hydrogen enriched stream 26 can be diverted, to the secondary combustion system 38 and/or to the hydrogen processing unit 40. In some embodiments, a stream modulator 28 is used to divert a specific quantity of the enriched hydrogen stream 26 to either the secondary combustion system 38 and/or to the hydrogen processing unit 40. The stream modulator may be a control valve or any other device, which device can divert predetermined portion of the hydrogen enriched stream 26.

In the co-generation systems disclosed herein, the burners in the primary combustion system 14 and gas turbine combustor 54 utilize premixed mixtures of fuel and oxidant and may comprise premixed swirling flow systems or non-swirling flow systems. Radial, axial, and/or double counterrotating swirlers may also be utilized.

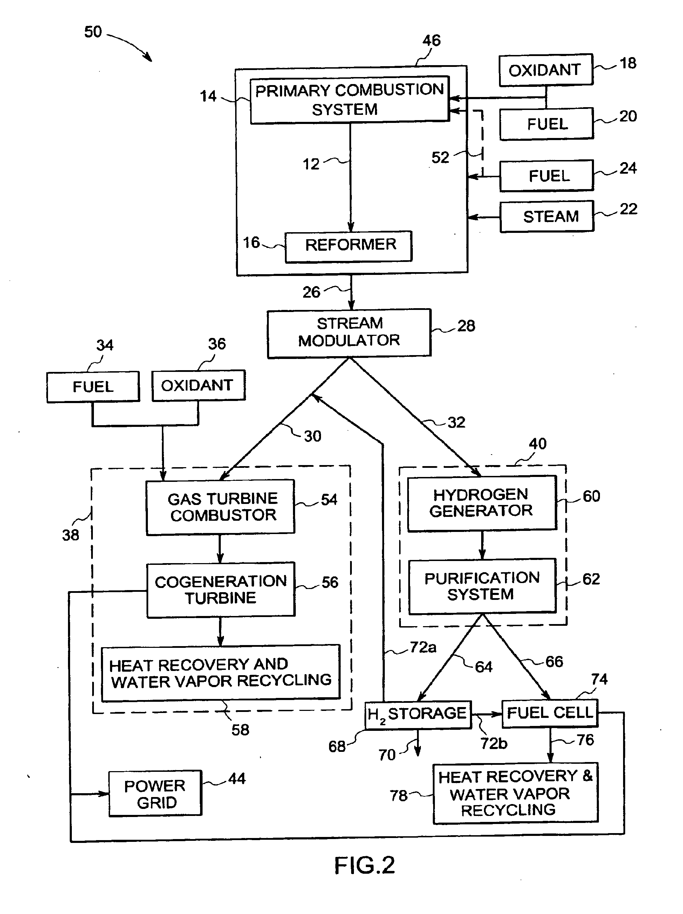

An embodiment showing another exemplary co-generation system 50 is illustrated in Fig. 2 in which like features are designated with like reference numerals. The co-generation system 50 comprises at least one primary combustion system 14 to burn a fuel rich mixture and at least one reformer 16. A mixture of an oxidant 18 and a fuel 20 is injected into the primary combusting system 14 for burning a fuel rich mixture and produce partially oxidized combustion products rich in hydrogen. In some embodiments the primary combustion chamber 14 and the reformer 16 is housed in a common combustion chamber 16. The co-generation system further comprises an injection system wherein steam 22 and fuel 24 are injected to the partially oxidized combustion product to form a mixed product stream 12 in a quenching operation. The mixed product stream 12 is fed into a reformer 16 for reforming the mixed product stream to produce a hydrogen enriched stream 26. In some embodiments a portion of the steam 52 is sent directly to the primary combustion system 14 for controlling the flame temperature.

A portion of the hydrogen enriched stream 30 is burned in a secondary combustion system 38 to produce electricity that may be connected to a power grid 44. Supplement Fuel 34 and oxidant 36 are added to the secondary combustion system 38. A second portion of the hydrogen enriched stream 32 is fed into a hydrogen processing unit 40 to produce hydrogen.

The secondary combustion system 38 further comprises a gas turbine combustor 54, a co-generation turbine 56 and a heat recovery and water vapor recycling system 58. Thermodynamic expansion of the hot gases fed into the cogeneration turbine 56 produces power to drive the co-generation turbine 56, which, in turn, generates electricity. Electricity from the co-generation turbine 56 is converted to an appropriate form provided to a distribution power supply network grid 44.

The co-generation systems disclosed herein comprises systems and methods of controlling the equivalence ratio such that the formation of thermal NOx is minimized by reducing the flame temperature in the primary combustion system 14. In a traditional turbine combustor, the primary way to control thermal NOx is to reduce the flame temperature in a burner. Since the overall combustion system equivalence ratio must be lean (to limit turbine inlet temperature and maximize efficiency), the first efforts to lower NOx emissions are directed towards designing a combustor with a leaner reaction zone. In premixed systems, the flame temperature is reduced because the overall equivalence ratio is lean. In diffusion systems, the flame temperature is reduced by water injection. Leaning out the flame zone (i.e., reducing the flame zone equivalence ratio) also reduces the flame length, and thus reduces the residence time that a gas molecule spends at NOx formation temperatures. Both of these mechanisms reduce NOx formation. However, the reduction in the primary zone equivalence ratio at full operating conditions is limited because of the large turndown in fuel flow (40:1), air flow (30:1), and fuel/air ratio (5:1) in industrial gas turbines. In traditional gas turbines, the fuel and air are injected directly into the reaction zone therein, and combustion generally occurs under lean conditions or at or near stoichiometric conditions, and there is substantial recirculation within the reaction zone.

One way to reduce NOx formation is to reduce the flame temperature by introducing a heat sink into the flame zone. Both water and steam are very effective at achieving this goal. However, although gas turbine output is enhanced due to the additional mass flow through the turbine, overall efficiency suffers due to the additional fuel that is required to heat the water to combustor temperature. By necessity, the water must be of boiler feed water quality to prevent deposits and corrosion in the hot turbine gas path area downstream of the combustor. Water injection is an extremely effective means for reducing NOx formation. However, the combustor design must observe certain measures when using this reduction technique. To maximize the effectiveness of the water used, fuel nozzles are designed with additional passages to inject water into the combustor head end. The water is thus effectively mixed with the incoming combustion air and reaches the flame zone at its hottest point. Steam injection for NOx reduction follows essentially the same path into the combustor head end as water. However, steam is not as effective as water in reducing thermal NOx formation. The high latent heat of water acts as a strong thermal sink in reducing the flame temperature. In general, for a given NOx reduction, approximately 1.6 times as much steam compared to water on a mass basis is required for control. There are practical limits to the amount of water or steam that can be injected into the combustor for a log hardwire life of a gas turbine.

Injecting water and/or steam into a combustor affects several parameters. First, water injection tends to excite the dynamic activity more than steam injection. The oscillating pressure loads on the combustion hardware act as vibratory forcing functions, and therefore must be minimized to ensure long hardware life. Through combustor design modifications, such as the addition of a multi-nozzle fuel system, significant reductions in dynamic pressure activity are possible. In the disclosed co-generations systems, the water and/or steam are injected into the combustion chamber, not into the gas turbine combustor 54. This separation enables the dynamic vibrations to be more effectively damped and be largely isolated. Second, as more and more water and/or steam is added to the combustor, a point is reached at which a sharp increase in carbon monoxide is observed. Normally, this is undesirable in a conventional turbine combustor as the emission of carbon monoxide also increases. However, in the disclosed co-generation systems, carbon monoxide is largely not a problem. This is due to the fact that the hydrogen enriched stream 26 is not fed into the co-generation turbine directly. A portion of the hydrogen enriched stream 26 gets diverted to the gas turbine combustor 54 where gets into contact with an oxidizing atmosphere, wherein the carbon monoxide may get oxidized. A second portion of the hydrogen enriched stream is directed to the hydrogen generator, which comprises a water-gas catalytic media, and therein, the carbon monoxide gets converted to carbon dioxide. Third, increasing water and/or steam injection reduces combustor-operating stability, and eventually reaches a point when the flame blows out. Fourthly, there can be an increase in unburned hydrocarbons (UHCs), but these can be minimized by the selection of the fuel composition, particularly in regards to smoke.

Referring back to Fig 2, in some embodiments, the gas turbine combustor 54 comprises a lean premixed combustion assembly (not shown), a secondary or lean direct injection (LDI) fuel injector assembly, and a transition piece for flowing hot supplemental gases of combustion to the turbine nozzles and turbine blades. The lean premixed combustor assembly comprises a casing, a plurality of premixing fuel nozzles, and a combustion liner within a sleeve. Combustion in the lean premixed combustor assembly occurs within the combustion liner. Combustion oxidant is directed within the liner via a flow sleeve, and enters the combustion liner through a plurality of openings therein. A combustion reaction occurs within the liner, releasing heat that drives the gas turbine. High-pressure oxidant for the lean premixed combustor assembly enters the flow sleeve, and a transition piece impingement sleeve, from an annular plenum. This high-pressure oxidant is supplied by a compressor, which utilizes a series of vanes and blades. Each premixing fuel nozzle includes a swirler, comprising a plurality of swirl vanes that impart rotation to the entering oxidant and a plurality of fuel spokes that distribute fuel, preferably natural gas, into the rotating oxidant stream. Supplemental fuel 34 and oxidant 36 may be premixed and added to the gas turbine combustor 54, as needed. The fuel and oxidant then mix, in an annular passage within the premix fuel nozzle, before reacting within the primary reaction zone in the gas turbine combustor 54, therein producing the hot supplemental gases. The primary reaction zone is filled with the stream of hot gases from the combustion chamber, which are also pressurized. The gas turbine combustor 54 is capable of operating at gas turbine high load conditions, mid-range load operating conditions, and low load operating conditions. In operation, the leanness of the flame and the flow rate of the supplemental gases are selected such that the combination of sources (i.e., hydrogen enriched stream 30 and hot supplemental gases produced in gas turbine combustor 54) produces a combustion mixture that is less than a 1:1 stoichiometry of fuel and oxidant, or in other words, is lean overall. The gas turbine combustor 54 powers the co-generation turbine 56, thereby producing electricity, which can be provided to an electrical power grid 44. The latent heat produced thereby can be recovered from the exhaust gases, and the water produced thereby can be recovered and recycled through the heat recovery and water vapor recycling system 58.

The hydrogen enriched stream 30 entering the gas turbine combustor 54 is fuel rich, and not sufficiently hot and pressurized to power a turbine. Therefore, they are augmented with supplemental burning fuel 34 and oxidant 36 in a fuel lean flame. After adding the supplemental fuel and oxidant to the gas turbine combustor 54, the turbine combustor 54 gases are sufficiently hot and pressurized to effectively power the co-generation turbine driven generator 56, therein resulting in the efficient production of electricity. Exhaust gases exiting the co-generation turbine are at a lower pressure, but still contain substantial latent heat. The latent heat of these exhaust gases can be recovered using heat exchangers, and the energy can be conserved for use in the plant, for instance, to preheat water in a boiler. The water in the exhaust gases can also be conserved, either to be recycled as water for steam, or to be used as a medium for the heat exchangers.

Use of the hydrogen enriched gases in the fuel lean turbine combustor 54 operating at leaner conditions, reduces the emissions therefrom, provides better stability of the fuel lean turbine combustor 54, and yields better operability characteristics thereof.

In one embodiment in accordance with the present technique, the rich combustion stage comprises one or more reciprocating engines.

In the disclosed co-generation systems, the fuel rich flame in the primary combustion system 14 operates at lower temperatures. The premixing of the fuel 20 and oxidant 18 ensures that there are no hot spots due to stoichiometric mixing of the fuel 20 and oxidant 18, which stoichiometric mixture that would raise the temperature of the combustion products sufficiently high to oxidize the ambient nitrogen forming NOx. Stoichiometric mixing of fuel and oxidant is defined as a ratio of oxidant and fuel sufficient to convert all the fuel to carbon dioxide and water. In the disclosed co-generation systems, lower flame temperatures and premixing minimize the formation of NOx in the primary combustion system 14. Rich combustion of fuel promotes the partial oxidation reaction (1), instead of the standard combustion reaction (2).
CH₄ + ½ O₂ → CO + 2 H_{2 (1)}
CH₄ + 2O₂ → CO₂ + 2 H₂O (2)

The partially oxidized stream from the primary combustion system 14 enriched in hydrogen is quenched by subsequent addition of steam 22 and fuel 24 to form the mixed product stream 12. The injection of steam 22 and fuel 24 in the partially oxidized stream lowers the temperature therein. The combination of heat, fuel and steam promotes the reformation of fuel such as natural gas as shown in the reaction (3). The reforming process leads to the formation of a reformed gas (also commonly known as syn gas), which is designated as the enriched hydrogen stream 26.
CH₄ + H₂O → CO + 3 H₂ (3)

The temperature in the combustion chamber 46 is further lowered, in part, because the reaction (3) between steam and natural gas to form hydrogen and carbon monoxide is endothermic. The addition of steam and fuel suppress the formation of nitrogen oxides (NOx).

The second portion of the enriched hydrogen stream 32 produced by the reformer 16 is diverted to a hydrogen processing unit 40. The hydrogen processing unit 40 comprises a hydrogen generator 60 and a purification system 62. In some embodiments, the hydrogen generator 60 is a water-gas catalytic converter for further enriching the content of hydrogen in the enriched hydrogen stream 32. The following water gas shift reaction (4) occurs in the hydrogen generator 60.
CO + H₂O → CO₂ + H₂O (4)

The stream exiting the hydrogen generator 60 is further enriched in hydrogen and comprises substantial amount of carbon dioxide formed in the water gas shift reaction (4). The stream exiting the hydrogen generator 60 is fed into the purification system 62. The purification system may comprise one or more condensers/heat exchangers (not shown), which separate the water from the exit stream from the hydrogen generator 60, thereby forming dried reformed gases. These heat exchanges recover the latent heat in the system. This recovered latent heat can be used for various needs in a plant, such as for example, to preheat water in a boiler. In one embodiment, the purification system 60 may comprise a moisture separator, (not shown) which may be a mechanical device, such as a centrifuge to separate water. In yet another embodiment, the water can be separated using at least one molecular sieve bed, which absorbs moisture. In some embodiments, the dried reformed gases, in addition to containing hydrogen, also comprise nitrogen, carbon monoxide, carbon dioxide, and small amounts of gaseous fuel (i.e., natural gas).

The purification system 62 further comprises a separation unit wherein the purification of the dried reformed gases may be achieved by applying various techniques known in the art, including but not limited to pressure swing adsorption, chemical absorption and membrane separation.

Pressure swing adsorption (PSA) may be used for separation of carbon dioxide from a mixture of gases containing hydrogen. In PSA techniques, at a high partial pressure, solid molecular sieves can adsorb carbon dioxide more strongly than hydrogen. As a result, at elevated pressures, carbon dioxide is removed from the mixture of gases comprising hydrogen when this mixture is passed through an adsorption bed. Regeneration of the bed is accomplished by depressurization and purging. Typically for critical operations, a plurality of adsorption vessels is used for continuous separation of carbon dioxide, wherein one adsorption bed is used while the others are regenerated.

Another technique for separation of carbon dioxide from a gas stream is chemical absorption using oxides, such as, calcium oxide (CaO) and magnesium oxide (MgO) or a combination thereof. In one embodiment, at elevated pressure and temperature, CO₂ is absorbed by CaO forming calcium carbonate (CaCO₃), thereby removing CO₂ from the gas mixture. The sorbent CaO is regenerated by calcinations of CaCO₃, which can again reform CaCO₃ to CaO.

Yet another technique used for separation of CO₂ from the dried reformed stream is chemical absorption of CO₂ using amines. The dried reformed gases may be cooled to a suitable temperature to use chemical absorption of carbon dioxide using amines. This technique is based on alkanol amines solvents that have the ability to absorb carbon dioxide at relatively low temperatures, and are easily regenerated by raising the temperature of the rich solvents. The solvents used in this technique may include triethanolamine, monoethanolamine, diethanolamine, diisopropanolamine, diglycolamine, and methyldiethanolamine

Membrane separation technology may also be used for separation of carbon dioxide from a gas stream. Membrane processes are generally more energy efficient and easier to operate than absorption processes. The membranes used for high temperature carbon dioxide separation include zeolite and ceramic membranes, which are selective to C02. However, the separation efficiency of membrane technologies is low, and complete separation of carbon dioxide may not be achieved through membrane separation. Typically membrane separators work more efficiently at higher pressures, and use of a membrane separator to separate the carbon dioxide from dried reformed gas in the hydrogen processing unit 40 may require a compressor to compress the dried reformed gases.

In some embodiments, the dried reformed gases in the hydrogen processing unit 40 uses a membrane separation technique to get pure hydrogen. A variety of polymers may be used for hydrogen selective membranes, which operate at relatively low temperatures. In one embodiment, the separation efficiency of the hydrogen can be enhanced by combining a PSA unit with CO2 separation membranes. In the first step H2 is separated by a PSA technique. In the next step, CO2 is separated by CO2 selective membranes. Some polymeric membranes show good permselectivity for CO2 separation at relatively low temperature.

In some embodiments, the hydrogen purification system 62 may use a cryogenic separation technique. Cryogenic separation may be used when it is important to recover multiple fractionates and multiple products. In some embodiments, the purification system 62 comprises liquefaction devices, refrigeration chillers and distillation equipment for the isolation of the individual component gases of the reformed gases.

The purified hydrogen stream exiting the purification system may be diverted in several ways. A portion of the purified hydrogen 64 may be stored in a hydrogen storage 68. The purified hydrogen may be stored as a cold pressurized liquid, a pressurized gas, or in some embodiments in absorbent materials such as carbon nanotubes, graphite encapsulated metals, nanomaterials, and/or other absorbent materials. In yet another embodiment the purified hydrogen may be stored as a metal hydride. Such stored hydrogen may then be shipped off-site, be sold, or be otherwise utilized within the co-generation system 50. A portion of the stored hydrogen 72a may be diverted to the secondary combustion system 38 as supplement fuel.

Additionally, another portion of the purified hydrogen 66 may be utilized in a fuel cell system 74 comprising one or more fuel cells. The fuel cell is selected from the group consisting of solid oxide fuel cells (SOFC), proton exchange membrane (PEM) fuel cells, molten carbonate fuel cells, phosphoric acid fuel cells, alkaline fuel cells, direct methanol fuel cells, regenerative fuel cells, zinc air fuel cells, and protonic ceramic fuel cells. The fuel cell system 74 utilizes the hydrogen to be immediately converted into electricity, which may then be sent to an electrical power grid 44, if desired. The by-product of the reactions in the fuel cell system 74 such as PEM fuel cells or SOFC is water and heat, which can both be recovered through a heat and water vapor recycling system 78 for use in the cogeneration plant. The hydrogen for the fuel cell system 76 may be supplied either from the hydrogen storage 68 through a stream 72b or directly from the hydrogen purification unit 62.

The co-generation system disclosed herein relates to systems and methods for producing hydrogen using a rich combustion-quench-reform device. These systems and methods preferably utilize a combustion system that forms a stream of hot gases, which are partially oxidized combustion product enriched with hydrogen. The combustion chamber(s) is a rich combustion-quench-reform device comprising at least one c-q-r stage, wherein each c-q-r stage comprises the steps of combusting, quenching and reforming.

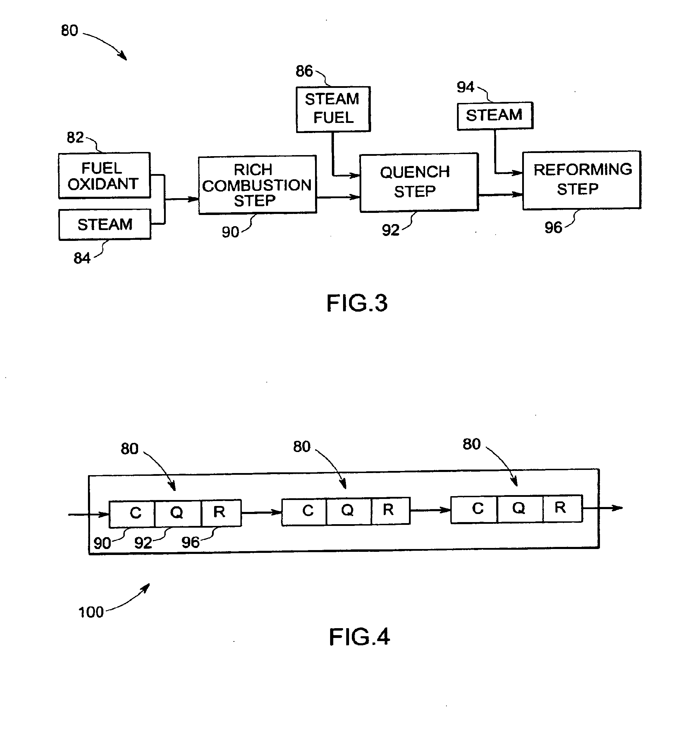

Fig. 3 shows a schematic illustration of an exemplary rich combustion-quench-reform (c-q-r) stage 80. Such rich combustion-quench-reform stage 80 can be used to optimize the production of hydrogen. The c-q-r stage 80 comprises three steps. First, in the combusting step 90, fuel and oxidant 82 are burned in the presence of injected steam 84. The oxidant may be air, oxygen rich air, oxygen depleted air or pure oxygen. The resulting hot gases, in the quenching step 92, are subsequently mixed with additional fuel and steam 86, forming a highly enriched fuel stream of hot gases. Next, in the reforming step 96, additional steam 94 is injected, which shifts the equilibrium of the mixture towards hydrogen. The stream of hot gases that is further enriched with hydrogen exits the reforming step, and can then pass into another similar c-q-r stage for further enrichment of hydrogen. Figure 3 illustrates schematically an exemplary rich combustion-quench-reform (c-q-r) device 100 having three, c-q-r stages 80 connected in series. Each stage 80 enhances the quality, or the percent of hydrogen, in the stream of hot gases. Multiple c-q-r stages increase the hydrogen yield, and incrementally increase the equivalence ratio, so that the overall equivalence ratio is greater than 1 1. The rich combustion-quench-reform devices may comprise one or more c-q-r stages, the number of which stages depend on the required yield of hydrogen.

In addition to the premixed mixture of the fuel and oxidant, it is anticipated that, because of structural limitations of the combustion chamber, the primary combustion system and components supplying the fuel and the oxidant to the primary combustion system, not all the combustion gases will always be totally premixed. The mixture of a fuel and an oxidant can be partially premixed prior to burning, for instance, as in the case of burners having both a diffusion flame and a premixed flame.

As described above, the systems and methods for co-generation of hydrogen and electricity disclosed herein provide systems that are uniquely responsive to the peak load demand fluctuations for electricity, while operating in a substantially steady state condition. Combining fuel cell technology with gas turbine technology creates a readily available back-up source of electricity during peak load periods. When the electrical loads are low, a greater percentage of the fuel can be converted into hydrogen, which can be stored for later use in fuel cells or any other application. When electrical demand is high, the fuel cells can be brought online to produce the electricity needed to meet the higher electrical demand. If a turbine system has a failure, or a planned shut down, then the fuel cells can provide a partial backup system therefor. If there is excess capacity of electricity, then the excess capacity can be used to manufacture hydrogen at a relatively inexpensive price. The hydrogen can then be used, as a fuel source for fuel cells that may be located offsite, or may even be mobile. Additionally, excess hydrogen can even be sold and distributed, in manners similar to petroleum-based fuels, for use in fuel cells that are located offsite.

## Claims

1. A system (10) for the co-generation of electricity and hydrogen said system (10) being operated in a substantially steady state condition and comprising:
i) at least one primary combustion system (14) for burning a fuel rich mixture, wherein the fuel rich mixture has an equivalence ratio corresponding to a fuel-to-oxidant ratio in the at least one primary combustion system (14) normalized by the stoichiometric fuel-to-oxidant ratio of greater than 1.0, and for producing partially oxidized combustion products rich in hydrogen;
ii) at least one injection system for injecting fuel (24) and steam (22) into said partially oxidized combustion products producing a mixed product stream;
iii) at least one reformer (16) for reforming said mixed product stream to produce a hydrogen enriched stream (26);
iv) a secondary combustion system (38) for burning at least a portion of said hydrogen enriched stream (26) to produce electricity, said secondary combustion system (38) comprising a co-generation turbine (56) to produce electricity;
v) a hydrogen processing unit (40) for receiving at least a second portion (32) of said hydrogen enriched stream (26) to produce hydrogen therefrom; and
vi) a stream modulator (28) for diverting predetermined portions of said hydrogen enriched stream (26) to said secondary combustion system (38) and said hydrogen processing unit (40).

2. The system (10) according to claim 1, wherein said primary combustion system (14) comprises a combustion chamber with an array of apertures for allowing steam to be added to said combustion chamber.

3. The system (10) according to any preceding claim, wherein said hydrogen processing unit (40) comprises a hydrogen generator (60) configured to receive said second portion (32) of the hydrogen enriched stream (26).

4. The system (10) according any preceding claim, further comprising a plurality of repeating units (100) comprising a respective combustion system, injection system and reformer, said repeating units (100) being connected in series wherein said hydrogen enriched stream (26) is fed into a combustion system of a first repeating unit (80) and a first hydrogen enriched stream from a reformer of said first repeating unit (80) is fed into a combustion system of a second repeating unit (80).

5. A method for the co-generation of electricity and hydrogen comprising the steps of:
i) burning, in at least one primary combustion system (14), a fuel rich mixture, wherein the fuel rich mixture has an equivalence ratio corresponding to a fuel-to-oxidant ratio in the at least one primary combustion system (14) normalized by the stoichiometric fuel-to-oxidant ratio of greater than 1.0, thereby producing partially oxidized combustion products rich in hydrogen;
ii) injecting fuel (24) and steam (22) into said partially oxidized combustion product to produce a mixed product stream;
iii) reforming said mixed product stream to produce a hydrogen enriched stream (26) in at least one reformer (16);
iv) combusting at least a portion of said hydrogen enriched stream (26) in a secondary combustion system (38) comprising a co-generation turbine (56) to produce electricity;
v) processing a second portion (32) of said hydrogen enriched stream (26) in a hydrogen processing unit (40) to produce hydrogen therefrom; and
vi) diverting predetermined portions of said hydrogen enriched stream (26) to said secondary combustion system (38) and said hydrogen processing unit (40) using a stream modulator (28).

## Patentansprüche

1. System (10) zum gekoppelten Erzeugen von Elektrizität und Wasserstoff, wobei das System (10) in einem im Wesentlichen stationären Zustand betrieben wird und Folgendes umfasst:
i) wenigstens ein primäres Verbrennungssystem (14) zum Verbrennen eines brennstoffreichen Gemischs, wobei das brennstoffreiche Gemisch ein Äquivalenzverhältnis, entsprechend einem Brennstoff-Oxidans-Verhältnis in dem wenigstens einen primären Verbrennungssystem (14) normiert durch das stöchiometrische Brennstoff-Oxidans-Verhältnis, von größer als 1,0 aufweist, und zum Erzeugen teilweise oxidierter, wasserstoffreicher Verbrennungsprodukte;
ii) wenigstens ein Einspritzsystem zum Einspritzen von Brennstoff (24) und Dampf (22) in die teilweise oxidierten Verbrennungsprodukte, wodurch ein gemischter Produktstrom erzeugt wird;
iii) wenigstens eine Reformieranlage (16) zum Reformieren des gemischten Produktstroms zum Erzeugen eines mit Wasserstoff angereicherten Stroms (26);
iv) ein sekundäres Verbrennungssystem (38) zur Verbrennung wenigstens eines Anteils des mit Wasserstoff angereicherten Stroms (26) zum Erzeugen von Elektrizität, wobei das sekundäre Verbrennungssystem (38) eine Kraft-Wärme-Turbine (56) zum Erzeugen von Elektrizität umfasst;
v) eine Wasserstoffverarbeitungseinheit (40) für die Aufnahme wenigstens eines zweiten Anteils (32) des mit Wasserstoff angereicherten Stroms (26) zum Erzeugen von Wasserstoff daraus; und
vi) einen Strommodulator (28) zum Leiten vorgegebener Anteile des mit Wasserstoff angereicherten Stroms (26) zu dem sekundären Verbrennungssystem (38) und der Wasserstoffverarbeitungseinheit (40).

2. System (10) nach Anspruch 1, wobei das primäre Verbrennungssystem (14) eine Verbrennungskammer mit einer Anordnung von Öffnungen zum Ermöglichen der Einbringung von Dampf in die Verbrennungskammer umfasst.

3. System (10) nach einem vorangehenden Anspruch, wobei die Wasserstoffverarbeitungseinheit (40) einen Wasserstoffgenerator (60) umfasst, der für die Aufnahme des zweiten Anteils (32) des mit Wasserstoff angereicherten Stroms (26) ausgestaltet ist.

4. System (10) nach einem vorangehenden Anspruch, das weiterhin eine Mehrzahl von Wiederholungseinheiten (100) umfasst, die ein jeweiliges Verbrennungssystem, Einspritzsystem und eine jeweilige Reformieranlage umfassen, wobei die Wiederholungseinheiten (100) in Reihe geschaltet sind, wobei der mit Wasserstoff angereicherte Strom (26) einem Verbrennungssystem einer ersten Wiederholungseinheit (80) zugeführt wird und ein erster mit Wasserstoff angereicherter Strom aus einer Reformieranlage der ersten Wiederholungseinheit (80) einem Verbrennungssystem einer zweiten Wiederholungseinheit (80) zugeführt wird.

5. Verfahren zum gekoppelten Erzeugen von Elektrizität und Wasserstoff, das folgende Schritte umfasst:
i) Verbrennen eines brennstoffreichen Gemischs in wenigstens einem primären Verbrennungssystem (14), wobei das brennstoffreiche Gemisch ein Äquivalenzverhältnis, entsprechend einem Brennstoff-Oxidans-Verhältnis in dem wenigstens einen primären Verbrennungssystem (14) normiert durch das stöchiometrische Brennstoff-Oxidans-Verhältnis, von größer als 1,0 aufweist, wodurch teilweise oxidierte, wasserstoffreiche Verbrennungsprodukte erzeugt werden;
ii) Einspritzen von Brennstoff (24) und Dampf (22) in das teilweise oxidierte Verbrennungsprodukt zum Erzeugen eines gemischten Produktstroms;
iii) Reformieren des gemischten Produktstroms zum Erzeugen eines mit Wasserstoff angereicherten Stroms (26) in wenigstens einer Reformieranlage (16);
iv) Verbrennen wenigstens eines Anteils des mit Wasserstoff angereicherten Stroms (26) in einem sekundären Verbrennungssystem (38), das eine Kraft-Wärme-Turbine (56) zum Erzeugen von Elektrizität umfasst;
v) Verarbeiten eines zweiten Anteils (32) des mit Wasserstoff angereicherten Stroms (26) in einer Wasserstoffverarbeitungseinheit (40) zum Erzeugen von Wasserstoff daraus; und
vi) Leiten vorgegebener Anteile des mit Wasserstoff angereicherten Stroms (26) zu dem sekundären Verbrennungssystem (38) und der Wasserstoffverarbeitungseinheit (40) unter Verwendung eines Strommodulators (28).

## Revendications

1. Système (10) pour la cogénération d'électricité et d'hydrogène, ledit système (10) fonctionnant sensiblement dans des conditions de régime permanent et comprenant :
i) au moins un système de combustion primaire (14) pour brûler un mélange riche en carburant, dans lequel le mélange riche en carburant a un rapport d'équivalence correspondant à un rapport du carburant à l'oxydant dans le au moins un système de combustion primaire (14) normalisé par le rapport stoechiométrique du carburant à l'oxydant supérieur à 1,0 et pour obtenir des produits de combustion partiellement oxydés riches en hydrogène ;
ii) au moins un système d'injection pour injecter du carburant (24) et de la vapeur d'eau (22) dans lesdits produits de combustion partiellement oxydés pour produire un courant de produits mixtes ;
iii) au moins un reformeur (16) pour reformer ledit courant de produits mixtes afin de produire un courant enrichi en hydrogène (26) ;
iv) un système de combustion secondaire (38) pour brûler au moins une partie dudit courant enrichi en hydrogène (26) afin de produire de l'électricité, ledit système de combustion secondaire (38) comprenant une turbine de cogénération (56) pour produire de l'électricité ;
v) une unité de traitement d'hydrogène (40) pour recevoir au moins une seconde partie (32) dudit courant enrichi en hydrogène (26) afin d'en tirer de l'hydrogène ; et
vi) un modulateur de vapeur (28) pour dévier des parties prédéterminées dudit courant enrichi en hydrogène (26) vers ledit système de combustion secondaire (38) et ladite unité de traitement d'hydrogène (40).

2. Système (10) selon la revendication 1, dans lequel ledit système de combustion primaire (14) comprend une chambre de combustion avec un réseau d'ouvertures pour permettre d'ajouter de la vapeur d'eau à ladite chambre de combustion.

3. Système (10) selon l'une quelconque des revendications précédentes, dans lequel ladite unité de traitement d'hydrogène (40) comprend un générateur d'hydrogène (60) configuré pour recevoir ladite seconde partie (32) du courant enrichi en hydrogène (26).

4. Système (10) selon l'une quelconque des revendications précédentes, comprenant en outre une pluralité d'unités répétitives (100) comprenant un système de combustion, un système d'injection et un reformeur respectifs, lesdites unités répétitives (100) étant raccordées en série, dans lequel ledit courant enrichi en hydrogène (26) est acheminé dans un système de combustion d'une première unité répétitive (80) et un premier courant enrichi en hydrogène venant d'un reformeur de ladite première unité répétitive (80) est acheminé dans un système de combustion d'une seconde unité répétitive (80).

5. Procédé de cogénération d'électricité et d'hydrogène, comprenant les étapes consistant à :
i) brûler, dans au moins un système de combustion primaire (14), un mélange riche en carburant, dans lequel le mélange riche en carburant a un rapport d'équivalence correspondant à un rapport du carburant à l'oxydant dans le au moins un système de combustion primaire (14) normalisé par le rapport stoechiométrique du carburant à l'oxydant supérieur à 1,0 en générant de la sorte des produits de combustion partiellement oxydés riches en hydrogène ;
ii) injecter du carburant (24) et de la vapeur d'eau (22) dans lesdits produits de combustion partiellement oxydés pour produire un courant de produits mixtes ;
iii) pour reformer ledit courant de produits mixtes afin de produire un courant enrichi en hydrogène (26) dans au moins un reformeur (16) ;
iv) brûler au moins une partie dudit courant enrichi en hydrogène (26) dans un système de combustion secondaire (38) comprenant une turbine de cogénération (56) afin de produire de l'électricité ;
v) traiter une seconde partie (32) dudit courant enrichi en hydrogène (26) dans une unité de traitement d'hydrogène (40) pour en tirer de l'hydrogène ; et
vi) dévier des parties prédéterminées dudit courant enrichi en hydrogène (26) vers ledit système de combustion secondaire (38) et ladite unité de traitement d'hydrogène (40) en utilisant un modulateur de vapeur (28).
